# EUROPEAN PATENT APPLICATION

(11) **EP 0 840 505 A2**
(43) Date of publication of application: **06.05.1998**
(21) Application number: 97119124.2
(22) Date of filing: 03.11.1997
(51) Int. Cl.: H04N 5/45

(54) **System to multiplex and blend graphics OSD and motion video pictures for digital television**

(30) Priority: 01.11.1996 US 30104 P
(71) Applicant: TEXAS INSTRUMENTS INCORPORATED, Dallas, Texas 75243 (US)
(72) Inventor: Chauvel, Gerard, 06600 Antibes (FR); Chae, Brian, Plano, TX 75075 (US)
(74) Representative: Holt, Michael

(57) **Abstract**

A system is provided to multiplex graphic and Motion video pictures for digital TV set-top box. The motion picture is generated by an MPEG Video decoder and the graphic windows are generated by an OSD Co-Processor. Each graphic window is characterized by a set of attributes that define the display mode, position on the screen, priority and blend factor. When a window is blended, the motion video and OSD color components are added together with a proportion of each defined by the window attributes. Decimated motion video picture can be also displayed within an OSD window; the OSD Co-processor generates an empty window that is filled by the video decoder with the decimated motion video.

## Description

### FIELD OF THE INVENTION

This invention relates to System to Multiplex and Blend Graphics OSD and Motion Video Pictures for digital television.

### BACKGROUND OF THE INVENTION

Digital TV set-top boxes are currently being tested and utilized in some areas. However, these boxes often provide insufficient capabilities for displaying windows.

### SUMMARY OF THE INVENTION

A system is provided to multiplex graphic and Motion video pictures for digital TV set-top box. The motion picture is generated by an MPEG Video decoder and the graphic windows are generated by an OSD Co-Processor. Each graphic window is characterized by a set of attributes that define the display mode, position on the screen, priority and blend factor. When a window is blended, the motion video and OSD color components are added together with a proportion of each defined by the window attributes. Decimated motion video picture can be also displayed within an OSD window; the OSD Co-processor generates an empty window that is filled by the video decoder with the decimated motion video.

### BRIEF DESCRIPTION OF THE DRAWINGS

The present invention will now be further described, by way of example, with reference to the accompanying drawings in which:
Figure 1 depicts an OSD window blended over video;
Figure 2 illustrates two windows over a full screen background color;
Figure 3 depicts decimated by ½ of motion video pictures;
Figure 4 shows a decimation filter algorithm;
Figure 5 shows video output timings;
Figures 6A and 6B depict the main blocks of a system to multiplex and blend graphic and motion video pictures of the present invention;
Figure 7 shows the timing of OSD outputs in different modes; and
Figure 8 shows of an OSD/video 4 levels blend matrix.

### DETAILED DESCRIPTION

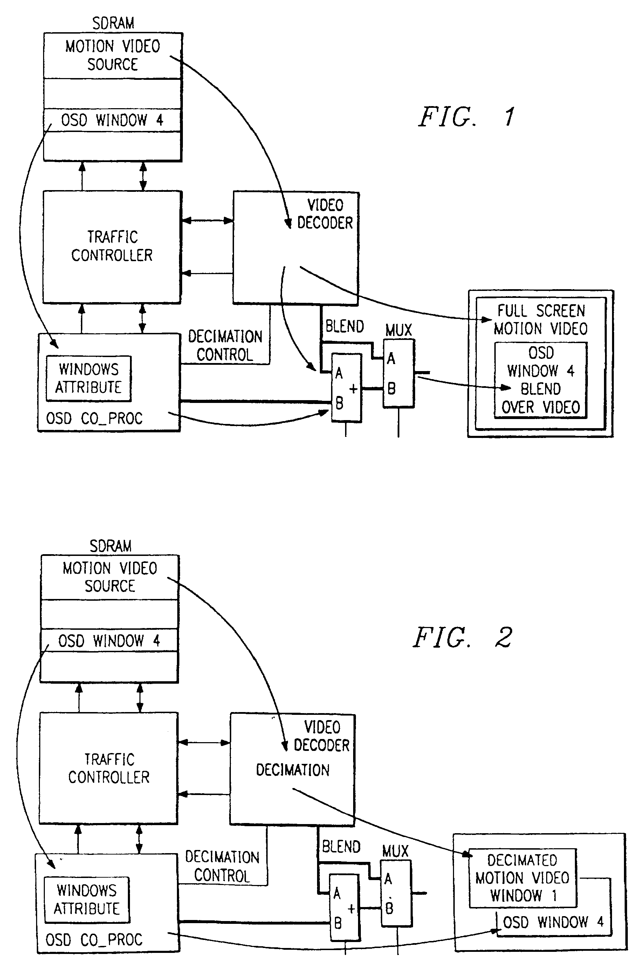

The video decoder (Figure 1) decodes MPEG2 data and built the motion video picture into the SDRAM, and display every frame a new picture. The OSD windows can be displayed over the motion video or blended with the video with different levels of blending. The coordinates, size and display attributes of each windows are defined in the window attribute memory. During display the OSD Co_processor read and interprets the OSD data stored within the SDRAM. A window can be: graphic, bit-map, still video or empty. The Figure 1 shows a full screen motion video picture with an OSD window. During the parts of motion video the Luma and Chroma is generated by the video decoder and transmitted to the video output through the input A of the Mux. In a graphic window the Luma and Chroma are generated by the OSD Co-processor through the input B of the Mux. If the window is blended, motion video and graphics are added together with a proportions defined by the window attributes.

Figure 2 contains two windows over a full screen background color. The window 4 contain a graphic, bit-map or still picture and the window 1 contain a motion video picture. The position and size of the each windows are defined by the attributes stored in OSD Co-processor Every frame a picture is read and decimate in real time. The decimation ratio is defined by the window attributes.

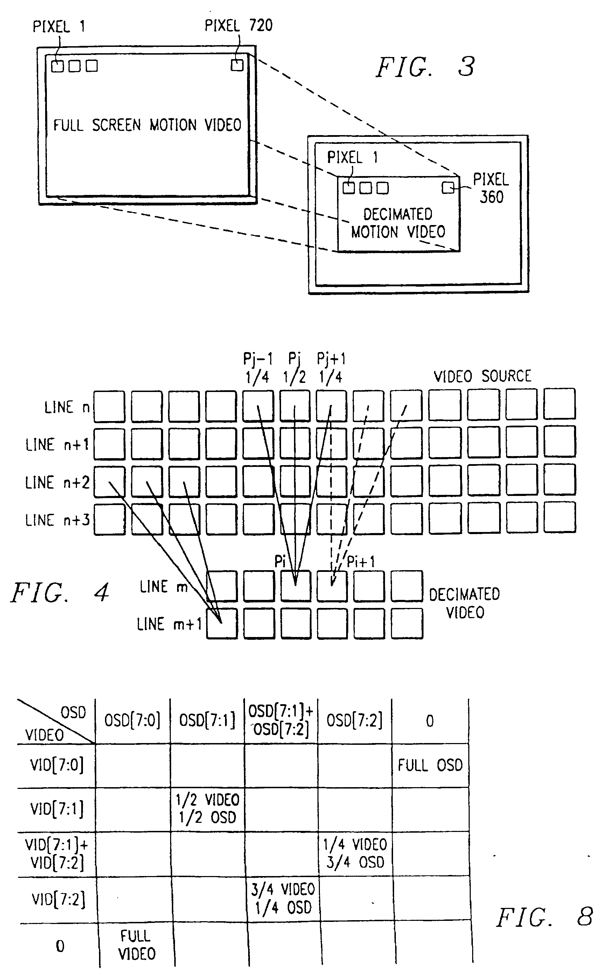

Full screen and decimated by ¼ motion video pictures are shown Figure 3 and Figure 4 shows the decimation filter algorithm. The video decoder decimate vertically by reading the source video every two lines. The line n+1 and n+3 are ignored. Horizontally the decimation filter decimate by 2. The number of pixels is reduced horizontally by 2. Pi is generated from Pj and its neighbor Pj-1 and Pj+1. The result of vertical and horizontal decimation is a motion picture 4 time smaller than the original picture. In this example three pixels are used to generate one, more complex filters with 5, 7 or 9 pixels can be used to improve picture quality. Different ratios of decimation are possible: 1/2, 1/3 and 1/4.

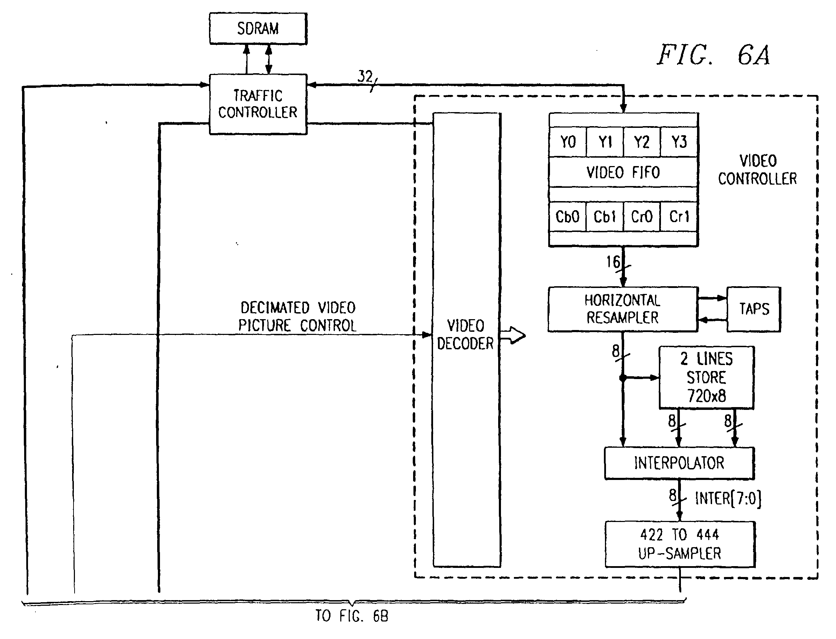

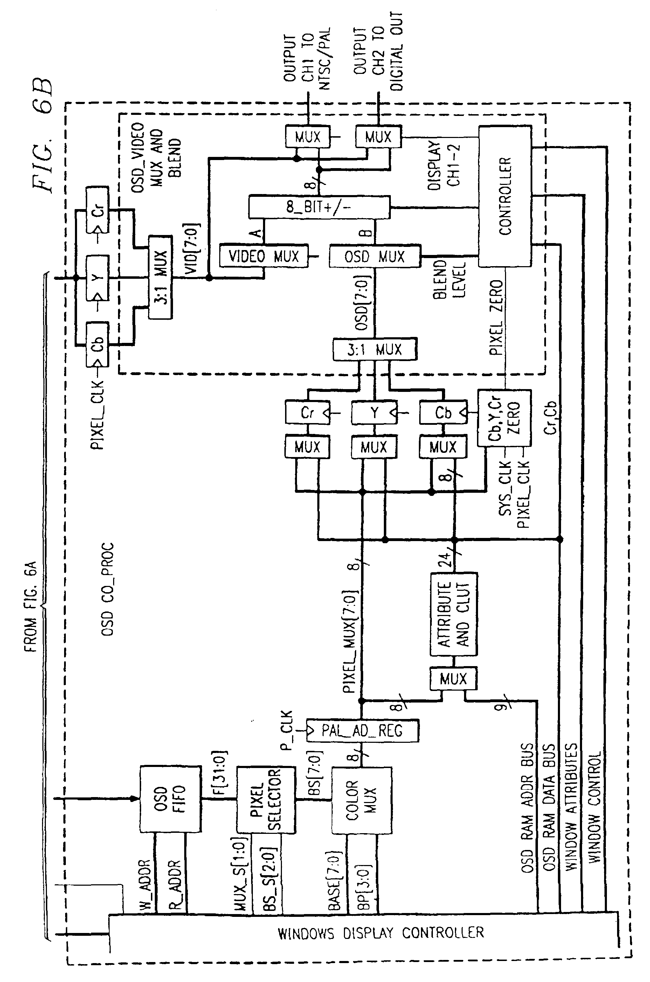

Figures 6A and 6B represent the main blocks of the system to multiplex and blend graphic and motion video pictures: the MPEG video decoder and the OSD Co-processor, traffic controller and SDRAM. The data to be displayed are stored in SDRAM, the traffic controller manage the access to the memory.

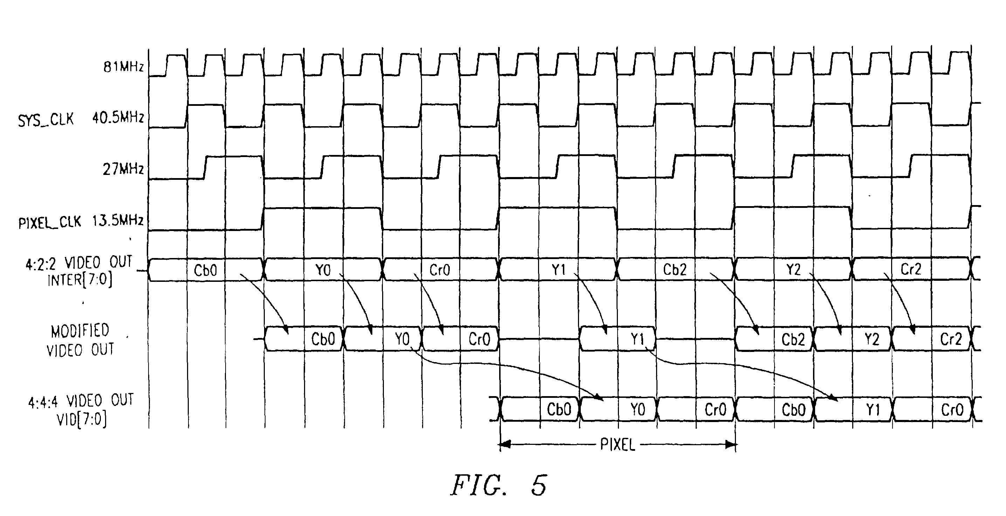

The video decoder contain several blocks to decode and display the MPEG2 data, they are: RISC CPU, VLD, IDCT, Motion Compensation and video controller Modules. The CPU execute micro-instructions, handle interrupt, control and synchronize modules and schedule traffic to SDRAM. Only the video controller is detailed in Figures 6A and 6B. The CPU manage the transfer from the motion video source picture to the Video FIFO. A 32-bit word contain 4 Luma Y0 to Y3 or 2 chroma samples Cb0, Cr0 and Cb1, Cr1. The transfer between SDRAM and FIFO is done by burst. During the display the video controller access samples in FIFO to generate pixel by pixel the 3 color components: Cb, Y and Cr. To reduce memory space the motion video picture is stored in 4:2:0 format, Chroma resolution is divided by 2 horizontally and vertically. Chroma is interpolated by the block interpolator that generates the 4:2:2 picture using the current line and 2 previous lines. The polyphase filter required for horizontal re-sampler is implemented in the video data path. The coefficients for the filter are stored in Taps memory. Filters support re-sampling from 360...704 to 720 and horizontal decimation by 2, 3 or 4. The output Inter[7:0] of the interpolator generate each pixel a Luma sample Y and a chroma sample alternately Cb or Cr, output frequency is 27Mhz. The video output is modified in order to be synchronous with the system clock 40.5Mhz. Figure 5 shows the modified video output and the output of the up-sampler. Pixel frequency is 13.5 Mhz.

The OSD Co-processor controls the display of the OSD windows. Each hardware window has the following attributes:
window position: any even pixel horizontal position on screen; windows with decimated video have to start from an even numbered video line also
window size: from 2 to 720 pixel wide (even values only) and 1 to 576 lines
window base address
data format: bitmap, YCrCb 4:4:4, YCrCb 4:2:2, and empty
bitmap resolution: 1, 2, 4, and 8 bits per pixel
full or half resolution for bitmap and YCrCb 4:4:4 windows
bitmap color palette base address
blend enable flag
4 or 16 levels of blending
transparency enable flag for YCrCb 4:4:4 and YCrCb 4:2:2
output channel control

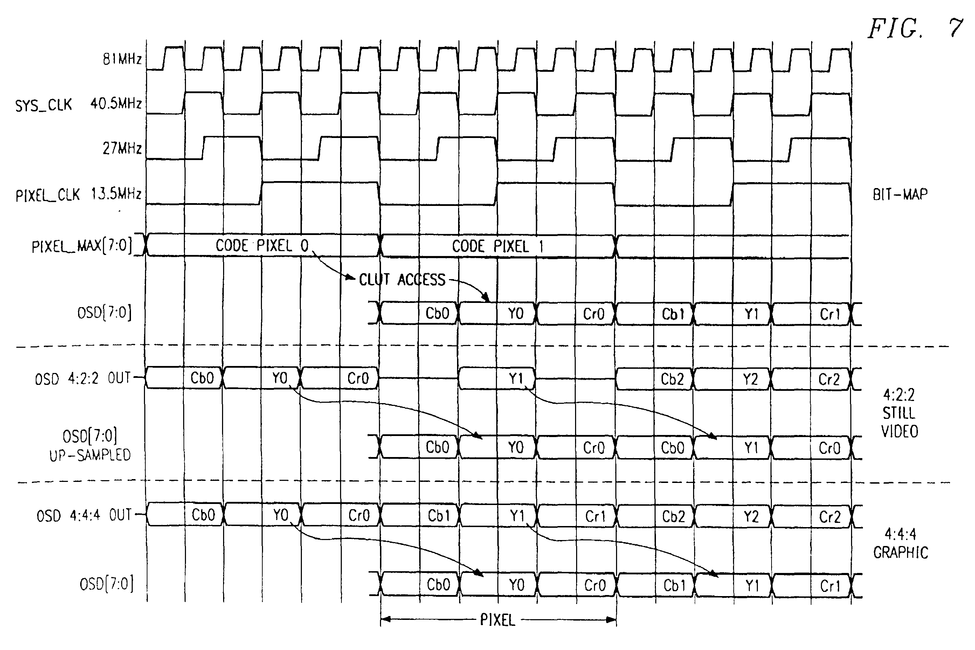

The window position, size and priority are stored in CAM memory located in the window display controller. The window attributes and CLUT are store in attribute memory. The OSD Co-processor manage the transfer between SDRAM and OSD FIFO, line by line and by segments of window to be displayed. Each pixel it generates the color component YCrCb or the CLUT address in bitmap. In graphic 4:4:4 mode, the window memory contain the 3 color components Cb, Y and Cr. In still video 4:2:2 mode the window memory contain the color components Y and alternately Cb, or Cr. In bit-map the window memory contain the code of the color to be displayed, the color components are stored in the CLUT. Figure 7 shows the timing of OSD outputs in different modes. In bit map the code of the color concatenated with the color base address select one of the color of the CLUT. The 3 color components are stored in the respective registers and multiplexed at the system clock frequency to generate Osd[7:0] output.

In 4:2:2 still video, the color components Cr, Y and Cb are transferred to the respective registers. Every 2 pixels only Y is modified. The 3 color components are multiplexed at the system clock frequency to generate Osd[7:0] output.

In 4:4:4 graphic, the color components Cr, Y and Cb are transferred to the respective registers and multiplexed at the system clock frequency to generate Osd[7:0] output.

In Figures 5 and 7, the color components of Vid[7:0] and Osd[7:0] are in phase and can be combined together to blend graphic and video.

When the blend enable attribute is selected the corresponding OSD window is blend over the video. Figure 8 shows a 4 levels blend matrix. The blend level is defined with the window attribute. The OSD output Ch1 and/or Ch2 are:
Full OSD: Output is Osd[7:0]
Full Video: Output is Vid[7:0]
½ Video and ½ OSD: Output is Osd[7:1] + Vid[7:1]
Video and ¼ OSD: Output is Osd[7:2] + Vid[7:1] + Vid[7:2]
¼ Video and ¾ OSD: Output is Osd[7:1] + Osd[7:2] + Vid[7:2]

Blending can be at window or color level. When blending at window level is selected the attributes define the level of blending according to the matrix Figure 8. In bit-map when color level is selected the LSB bit(s) of Cb and Cr are used to select the blend level.

In graphic of still video when blend is enable, the value zero of Cb, Y and Cr indicate a transparent color. The corresponding OSD pixels are replaced with the Vid[7:0]].

Empty window attribute selects a decimated motion picture in an OSD window. During the display the window display controller generate a signal: "Decimated window control" to indicate to the video controller the presence of a decimated window and the decimation ratio. The Video decoder decimate vertically by loading the video FIFO with the selected motion video lines, every 2, 3 or 4 lines depending of the decimation ratio. The horizontal re-sampler decimate horizontally by 2, 3 or 4 with the corresponding decimation filter. Window control and decimated video picture control select the Vid[7:0] output to fill the empty window. The position of the empty window is selected by window attributes.

The attribute output channel control selects the windows to be displayed at the outputs Ch1 and/or Ch2. Each window can be selected independently. When a window is not selected the corresponding area is replaced by the motion video. This system allows to have one channel for VCR recorder that records video and sub-title and the second channel with the full OSD menu.

## Claims

1. A system for generating synchronous color components from different display modes comprising:
a video decoder, and
an OSD co-processor,
wherein said display modes are selected from Motion video, 4:2:2, 4:4:4 and bit-map, or combinations thereof.

2. A blending and decimated window system comprising:
a video decoder, and
an OSD co-processor.
